# EUROPEAN PATENT SPECIFICATION

(11) **EP 2 977 174 B1**
(45) Date of publication and mention of the grant of the patent: **12.06.2019**
(21) Application number: 13878628.0
(22) Date of filing: 30.04.2013
(51) Int. Cl.: B29C 45/64, B29C 49/56, B29C 49/36, B29L 22/00

(54) **LINKAGE MECHANISM BETWEEN UNIAXIAL DIE OPENING AND CLOSING AND BOTTOM DIE LIFTING**
VERBINDUNGSMECHANISMUS ZWISCHEN EINER EINACHSIGEN MATRIZENÖFFNUNG UND -SCHLIESSUNG UND DEM ANHEBEN EINER UNTEREN MATRIZE
MÉCANISME DE LIAISON ENTRE OUVERTURE ET FERMETURE DE MATRICE UNIAXIALE ET LEVAGE DE MATRICE INFÉRIEURE

(30) Priority: 19.03.2013 CN 201310088016
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); ZHU, Xingan, Zhangjiagang Jiangsu 215624 (CN); RUI, Xiaoju, Zhangjiagang Jiangsu 215624 (CN); HE, Deping, Zhangjiagang Jiangsu 215624 (CN)
(74) Representative: De Vries & Metman
(86) International application number: PCT/CN2013/075030
(87) International publication number: WO 2014/146335

(56) References cited:
- WO-A1-2006/029585
- WO-A1-2007/025912
- WO-A1-2014/071917
- CN-A- 102 922 731
- CN-A- 102 962 985
- CN-A- 102 962 989
- CN-U- 202 293 307
- CN-U- 203 157 120
- CN-Y- 201 158 141
- US-A- 5 346 386
- US-A1- 2010 203 185
- US-A1- 2011 280 984
- US-A1- 2012 177 771

## Description

### Field of the Invention

The present invention relates to the field of processing equipment of a beverage bottle, and more particularly to a linkage of mould opening and closing mechanism and a bottom mould elevating.

### Description of the Related Art

Generally a bottle blowing machine comprises a mould opening and closing mechanism and a bottom mould elevating mechanism. A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame. A conventional bottom mould elevating mechanism comprises an elevating bracket and a bottom mould cam. The elevating bracket is provided with a guide rail, a guide rod and a roll wheel. The elevating bracket is mounted into a sliding groove of the machine frame by the guide rail. A spring is sheathed on the guide rod, a wheel shaft protruding towards a side is provided at the bottom of the elevating bracket, and the roll wheel is mounted on the wheel shaft. The bottom mould cam is located above the roll wheel and contacts the roll wheel. The guide rod is mounted on a support plate laterally extending on the top of the elevating bracket and. The spring is located between the support plate and the machine frame. The bottom mould elevating mechanism presses the elevating bracket by means of the bottom mould cam such that the bottom mould descends, and the elevating bracket is uplifted under the effect of the spring such that the bottom mould rises.

A bottom mould locking mechanism with double shafts is disclosed in patent publication No. US 2010203185A1. A blow mold comprises mold halves and a base part, which can be positioned by a lifting device. There are two shafts, one extends in the longitudinal direction of the blowing station and another drive shaft. To predetermine positioning motions, the base part is connected by a connecting rod with a positioning lever, which is connected with the drive shaft. The base part is guided by a cam follower in a cam track, which extends within a cam support connecting with the support structure rigidly. To predetermine positioning motions, the base part is connected by a connecting rod with a positioning lever, which is connected with the drive shaft.

Further devices are known from No. US 2012177771, No. WO 2014071917, No. US 2012280984, No. WO 2007025912 and No. US 5346386.

Thus, in the prior art, the mould opening and closing mechanism, bottom mould elevating mechanism and bottom mould positioning mechanism are complicated in configuration and bulky, and each mechanism is self-driven, thereby leading to the inconvenience of operation and high cost.

### Summary of the Invention

An object of the invention is to provide an improved linkage of mould opening and closing and bottom mould elevating.

For the foregoing purpose, the following technical solution is utilized in the invention. A system comprising a bottle blow moulding machine, a linkage of mould opening and closing and bottom mould elevating, mounted on the bottle blowing machine, comprising
a mould opening and closing assembly comprising a fixed mould plate, a bottom mould slidable relative to the fixed mould plate in vertical direction, and a moving mould plate rotatably connected with the fixed mould plate by a rotation shaft, when the mould opening and closing assembly is in the mould closing state, the fixed mould plate, the moving mould plate and the bottom mould together enclose to provide a cavity;
this system is characterized in that the linkage also comprises an elevating assembly comprising a protrusion fixedly disposed on the rotation shaft, an elevating rod fixedly connected with the bottom mould and a sliding block fixed on the elevating rod, a guiding groove is opened on the protrusion, the sliding block is slidably inserted into the guiding groove, in the course of rotation of the rotation shaft, the contact position of the guiding groove with the sliding block rises or descends and the sliding block moves in up-down direction under the guiding of the guiding groove ; and
a power source for driving the rotation shaft to rotate.

Preferably, the driving assembly also comprises a swing arm for connecting the rotation shaft with the power source, and the power source drives the rotation of the rotation shaft by the swing arm.

Preferably, the swing arm is fixedly connected with a lower end of the rotation shaft.

Preferably, the axis of rotation the rotation shaft is parallel to the direction of movement of the elevating rod relative to the machine frame, and the guiding groove inclinedly extends relative to a plane perpendicular to the axis of rotation.

Preferably, the protrusion has an arc-shaped side, the central axis of the circumference where the arc-shaped side is and the axis of rotation coincide, and the guiding groove is opened on the arc-shaped side.

Preferably, the mould opening and closing assembly also comprises a locking mechanism for locking the moving mould plate with the fixed mould plate in the mould closing state, at least one first connecting convex platform is provided on the moving mould plate, and a pin hole is opened on the first connecting convex platform, a second connecting convex platform which is staggered with the first connecting convex platform in up-down direction is provided on the fixed mould plate (2). The locking mechanism comprises a connecting shaft slidably disposed on the fixed mould plate, a connecting rod fixedly connected with connecting shaft, and a locking pin fixedly connected with the connecting rod. A hole is opened on the second connecting convex platform for the connecting rod and the locking pin sliding therein. When in the mould opening state, the locking pin is located in the hole, when in the mould closing state, the locking pin slides relative to the second connecting convex platform and extends through the hole to insert into the pin hole.

Preferably, the linkage also comprises a machine frame which comprises a support frame fixedly connected on the fixed mould plate, an upper frame located above the support frame and an upright frame fixedly connected between the support frame and the upper frame. The mould opening and closing assembly is located above the support frame, and the protrusion is located below the support frame.

Preferably, a first through-hole and a second through-hole respectively are opened on the support frame, the elevating rod slidably extends through the first through-hole and an upper end of the elevating rod is located above the support frame, the rotation shaft extends through the second through-hole and is rotatable in the second through-hole.

Preferably, an upper end of the rotation shaft is rotatably connected with the upper frame.

Due to the above technical solution, the present invention has the following advantages as compared with the prior art: the linkage of the mould opening and closing assembly and the bottom mould elevating assembly are driven by one rotation shaft. Thus, the driving is achieved by a simple configuration, and the device of the invention is simple in structure and convenient in operation.

### Brief Description of the Drawings

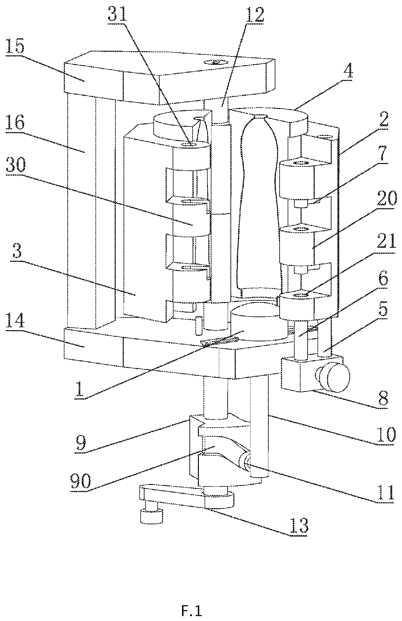

Fig.1 is a schematic drawing of a linkage of the invention in mould opening state according to the invention;

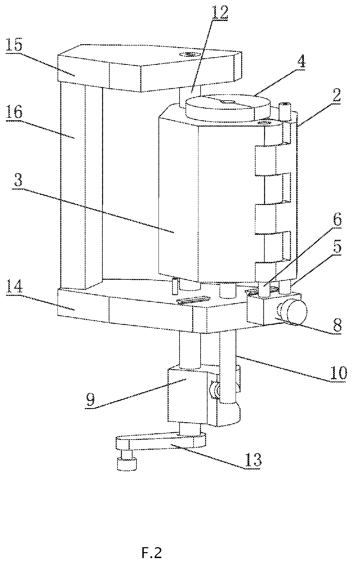

Fig.2 is a schematic drawing of the linkage of the invention in mould closing state according to the invention.
   wherein: 1. a bottom mould; 2. a fixed mould plate; 20. a second connecting convex platform; 21. a hole; 3. a moving mould plate; 30. a first connecting convex platform; 31. a pin hole; 4. a mould; 5. a connecting shaft; 6. a locking pin; 7. a connecting rod; 8. a driving block; 9. a protrusion; 90. a guiding groove; 10. an elevating rod; 11. a sliding block; 12. a rotation shaft; 13. a swing arm; 14. a support frame; 15. an upper frame; 16. an upright frame.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

The linkage of mould opening and closing and bottom mould elevating shown in fig.s is mounted on a bottom blowing machine. The linkage comprises a mould opening and closing assembly, an elevating assembly and a driving assembly for driving the movement of the mould opening and closing assembly and the elevating assembly. The assemblies will be described in more detail hereinafter.

The mould opening and closing assembly comprises a fixed mould plate 2, a bottom mould 1 slidable relative to the fixed mould plate in vertical direction, and a moving mould plate rotatably connected with the fixed mould plate 2 by a rotation shaft. When the mould opening and closing assembly is in the mould closing state, the fixed mould plate2, the moving mould plate 3 and the bottom mould 1 together enclose to provide a cavity.

The elevating assembly comprises a protrusion 9 fixedly disposed on the rotation shaft 12, an elevating rod 10 fixedly connected with the bottom mould 1 and a sliding block 11 fixed on the elevating rod 10. A guiding groove 90 is opened on the protrusion 9, and the sliding block 11 is slidably inserted into the guiding groove 90. In the course of rotation of the rotation shaft 12, the contact position of the guiding groove 90 with the sliding block 11 rises or descends, and the sliding block 11 moves in up-down direction under the guiding of the guiding groove 90.

A power source is used for driving the rotation of the rotation shaft 12.

The driving assembly also comprises swing arm, and the power source drives the rotation of the rotation shaft 12 by the swing arm 13.

The swing arm 13 is fixedly connected with the lower end of the rotation shaft 12. The axis of rotation of the rotation shaft 12 is parallel to the direction of movement of the elevating rod 10 relative to the machine frame, and the guiding groove 90 inclinedly extends relative to a plane perpendicular to the axis of rotation.

The protrusion 9 has an arc-shaped side, and the central axis of the circumference where the arc-shaped side is and the axis of rotation of the rotation shaft 12 coincide. The guiding groove 90 is opened on the arc-shaped side.

The mould opening and closing assembly also comprises a locking mechanism for locking the moving mould plate 3 with the fixed mould plate 2 in the mould closing state. At least one first connecting convex platform 30 is provided on the moving mould plate 3, and a pin hole 31 is opened on the first connecting convex platform 30. A second connecting convex platform 20 which is staggered with the first connecting convex platform 30 in up-down direction is provided on the fixed mould plate 2. The locking mechanism comprises a connecting shaft 5 slidably disposed on the fixed mould plate 2, a connecting rod 7 fixedly connected with the connecting shaft 5, and a locking pin 6 fixedly connected with the connecting rod 7. A hole 21 is opened on the second connecting convex platform 20 for the connecting rod 7 and the locking pin 6 slides therein, when in the mould opening state, the locking pin 6 is located in the hole 21, when in the mould closing state, the locking pin 6 slides relative to the second connecting convex platform 20 and extends through the hole 21 to insert into the pin hole 31.

The above linkage also comprises a machine frame which comprises a support frame 14 fixedly connected on the fixed mould plate 2, an upper frame 15 located above the support frame 14 and an upright frame 16 fixedly connected between the support frame 14 and the upper frame 15. The mould opening and closing assembly is located above the support frame 14, and the protrusion 9 is located below the support frame 14.

A first through-hole and a second through-hole are opened on the support frame 14, the elevating rod 10 slidably extends through the first through-hole, an upper end of the elevating rod 2 is located above the support frame 1, and the rotation shaft 12 extends through the second through-hole and is rotatable in the second through-hole. The upper end of the rotation shaft 12 is rotatably connected with the upper frame 15. The above embodiment is described for illustrating the technical concept and features of the invention, the aim is intended to enable a person skilled in the art to appreciate the content of the invention and further implement it, and the protecting scope of the invention can not be limited hereby.

## Claims

1. A system comprising:
a bottle blow moulding machine;
a linkage of mould opening and closing and bottom mould elevating, mounted on the bottle blowing machine, comprising:
a mould opening and closing assembly comprising a fixed mould plate (2), a bottom mould (1) slidable relative to the fixed mould plate (2) in vertical direction, and a moving mould plate (3) rotatably connected with the fixed mould plate (2) by a rotation shaft (12), whereby when the mould opening and closing assembly is in the mould closing state, the fixed mould plate (2), the moving mould plate (3) and the bottom mould (1) together enclose to provide a cavity;
**characterized in that** the linkage also comprises:
an elevating assembly comprising a protrusion (9) fixedly disposed on the rotation shaft (12), an elevating rod (10) fixedly connected with the bottom mould (1) and a sliding block (11) fixed on the elevating rod (10), a guiding groove (90) being opened on the protrusion (9), the sliding block (11) being slidably inserted into the guiding groove (90), in the course of rotation of the rotation shaft (12), the contact position of the guiding groove (90) with the sliding block (11) rises or descends and the sliding block (11) moves in up-down direction under the guiding of the guiding groove (90); and
a power source for driving the rotation of the rotation shaft (12).

2. The system as claimed in claim 1, wherein the driving assembly also comprises a swing arm (13) for connecting the rotation shaft (12) with the power source, the power source driving the rotation of the rotation shaft (12) by the swing arm (13).

3. The system as claimed in claim 2, wherein the swing arm (13) is fixedly connected with a lower end of the rotation shaft (12).

4. The system as claimed in claim 1, wherein the axis of rotation of the rotation shaft (12) is parallel to the direction of movement of the elevating rod (10) relative to the machine frame, the guiding groove (90) inclinedly extending relative to a plane perpendicular to the axis of rotation.

5. The system as claimed in claim 1, wherein the protrusion (9) has an arc-shaped side on which the guiding groove (90) is opened, the central axis of the circumference where the arc-shaped side and the axis of rotation coincide.

6. The system as claimed in claim 1, wherein the mould opening and closing assembly also comprises a locking mechanism for locking the moving mould plate (3) with the fixed mould plate (2) in the mould closing state, at least one first connecting convex platform (30) being provided on the moving mould plate (3), and a pin hole (31) being opened on the first connecting convex platform (30), , a second connecting convex platform (20) which is staggered with the first connecting convex platform (30) in up-down direction being provided on the fixed mould plate (2), the locking mechanism comprising a connecting shaft (5) slidably disposed on the fixed mould plate (2), a connecting rod (7) fixedly connected with connecting shaft (5), and a locking pin (6) fixedly connected with the connecting rod (7), a hole (21) being opened on the second connecting convex platform (20) for the connecting rod (7) and the locking pin (6) sliding therein, when in the mould opening state, the locking pin (6) is located in the hole (21), when in the mould closing state, the locking pin (6) slides relative to the second connecting convex platform (20) and extends through the hole (21) to insert into the pin hole (31).

7. The system as claimed in any of claims 1-6, wherein the linkage also comprises a machine frame which comprises a support frame (14) fixedly connected on the fixed mould plate (2), an upper frame (15) located above the support frame (14) and an upright frame (16) fixedly connected between the support frame (14) and the upper frame (15), the mould opening and closing assembly being located above the support frame (14), and the protrusion (9) being located below the support frame (14).

8. The system as claimed in claim 7, wherein a first through-hole and a second through-hole respectively are opened on the support frame (14), the elevating rod (10) slidably extending through the first through-hole and an upper end of the elevating rod (10) being located above the support frame (14), the rotation shaft (12) extending through the second through-hole and being rotatable in the second through-hole.

9. The system as claimed in claim 7, wherein an upper end of the rotation shaft (12) is rotatably connected with the upper frame (15).

## Patentansprüche

1. System aufweisend:
eine Flaschenblasformmaschine;
einen an der Flaschenblasformmaschine angeordneten Verbindungsmechanismus zum Öffnen/Schließen einer Matrize und Anheben einer Bodenmatrize, aufweisend:
eine Matrizen-Öffnungs-und-Schließ-Anordnung, aufweisend eine stationäre Matrizenplatte (2), eine Bodenmatrize (1), die relativ zu der stationären Matrizenplatte (2) in vertikaler Richtung gleitbar ist, und eine mobile Matrizenplatte (3), die über eine Drehwelle (12) drehbar mit der stationären Matrizenplatte (2) verbunden ist, wobei, wenn die Matrizen-Öffnungs-und-Schließ-Anordnung in dem Matrizenschließzustand ist, die stationäre Matrizenplatte (2), die mobile Matrizenplatte (3) und die Bodenmatrize (1) zusammen einen Hohlraum umschließen;
**dadurch gekennzeichnet, dass** der Verbindungsmechanismus ferner aufweist:
eine Hebeanordnung, aufweisend einen fest an der Drehwelle (12) angeordneten Vorsprung (9), eine fest mit der Bodenmatrize (1) verbundene Hebestange (10) und einen an der Hebestange (10) befestigten Gleitblock (11), wobei an dem Vorsprung (9) eine Führungsrille (90) ausgespart ist und der Gleitblock (11) gleitbar in der Führungsrille (90) eingesetzt ist, wobei im Verlaufe der Drehung der Drehwelle (12) die Kontaktposition der Führungsrille (90) mit dem Gleitblock (11) steigt oder sinkt und der Gleitblock (11), geführt von der Führungsrille (90), sich in eine Aufwärts-Abwärts-Richtung bewegt; und
eine Energiequelle zum Antreiben der Drehung der Drehwelle (12) .

2. System nach Anspruch 1, wobei die Antriebsanordnung desweiteren einen Schwingarm (13) zum Verbinden der Drehwelle (12) mit der Energiequelle aufweist, wobei die Energiequelle über den Schwingarm (13) die Drehwelle (12) in Drehung versetzt.

3. System nach Anspruch 2, wobei der Schwingarm (13) fest mit einem unteren Ende der Drehwelle (12) verbunden ist.

4. System nach Anspruch 1, wobei die Drehachse der Drehwelle (12) parallel zur Richtung der Bewegung der Hebestange (10) relativ zum Maschinenrahmen ist, wobei sich die Führungsrille (90) schräg bezüglich einer zur Drehachse senkrechten Ebene erstreckt.

5. System nach Anspruch 1, wobei der Vorsprung (9) eine bogenförmige Seite hat, an der die Führungsrille (90) ausgespart ist, wobei die Mittelachse des Umfangs der bogenförmigen Seite und die Drehachse koinzident sind.

6. System nach Anspruch 1, wobei die Matrizen-Öffnungs-und-Schließ-Anordnung desweiteren einen Verriegelungsmechanismus aufweist, um in dem Matrizenschließzustand die mobile Matrizenplatte (3) mit der stationären Matrizenplatte (2) zu verriegeln, wobei
mindestens eine erste konvexe Verbindungsplattform (30) an der mobilen Matrizenplatte (3) bereitgestellt ist und ein Nadelloch (31) an der ersten Verbindungsplattform (30) ausgespart ist,
eine zweite konvexe Verbindungsplattform (20), die in Aufwärts/Abwärts-Richtung versetzt bezüglich der ersten konvexen Verbindungsplattform (30) angeordnet ist, an der stationären Matrizenplatte (2) bereitgestellt ist,
der Verriegelungsmechanismus einen an der stationären Matrizenplatte (2) gleitbar angeordneten Verbindungsschaft (5), eine fest mit dem Verbindungsschaft (5) verbundene Verbindungsstange (7) und einen fest mit der Verbindungsstange (7) verbundenen Verriegelungsstift (6) aufweist,
ein Loch (21) an der zweiten konvexen Verbindungsplattform (20) ausgespart ist, worin die Verbindungsstange (7) und der Verriegelungsstift (6) gleiten,
in dem Matrizenöffnungszustand der Verriegelungsstift (6) sich in dem Loch (21) befindet und in dem Matrizenschließzustand der Verriegelungsstift (6) relativ zu der zweiten konvexen Verbindungsplattform (20) gleitet und sich durch das Loch (21) erstreckt, um sich in das Nadelloch (31) zu schieben.

7. System nach einem der Ansprüche 1 bis 6, wobei der Verbindungsmechanismus desweiteren einen Maschinenrahmen aufweist, der einen fest mit der stationären Matrizenplatte (2) verbundenen Trägerrahmen (14), einen oberhalb des Trägerrahmens (14) angeordneten oberen Rahmen (15) und einen fest zwischen dem Trägerrahmen (14) und dem oberen Rahmen (15) verbundenen aufrechten Rahmen (16) aufweist, wobei die Matrizen-Öffnungs-und-Schließ-Anordnung oberhalb des Trägerrahmens (14) angeordnet ist und der Vorsprung (9) unterhalb des Trägerrahmens (14) angeordnet ist.

8. System nach Anspruch 7, wobei ein erstes Durchgangsloch und ein zweites Durchgangsloch jeweils an dem Trägerrahmen (14) ausgespart sind, wobei die Hebestange (10) sich gleitbar durch das erste Durchgangsloch erstreckt und ein oberes Ende der Hebestange (10) sich oberhalb des Trägerrahmens (14) befindet, wobei sich die Drehwelle (12) durch das zweite Durchgangsloch erstreckt und in dem zweiten Durchgangsloch drehbar ist.

9. System nach Anspruch 7, wobei ein oberes Ende der Drehwelle (12) drehbar mit dem oberen Rahmen (15) verbunden ist.

## Revendications

1. Système comprenant :
une machine de moulage par soufflage de bouteilles ;
une tringlerie d'ouverture et de fermeture de moule et d'élévation de moule de fond, montée sur la machine de soufflage de bouteilles, comprenant :
un ensemble d'ouverture et de fermeture de moule comprenant une plaque de moule fixe (2), un moule de fond (1) coulissant par rapport à la plaque de moule fixe (2) dans une direction verticale, et une plaque de moule mobile (3) raccordée en rotation à la plaque de moule fixe (2) par un arbre de rotation (12), moyennant quoi lorsque l'ensemble d'ouverture et de fermeture de moule est dans l'état de fermeture de moule, la plaque de moule fixe (2), la plaque de moule mobile (3) et le moule de fond (1) se referment ensemble pour fournir une cavité ;
**caractérisé en ce que** la tringlerie comprend également :
un ensemble d'élévation comprenant une protubérance (9) disposée à demeure sur l'arbre de rotation (12), une tige d'élévation (10) raccordée à demeure avec le moule de fond (1) et un bloc coulissant (11) fixé sur la tige d'élévation (10), une gorge de guidage (90) étant ouverte sur la protubérance (9), le bloc coulissant (11) étant inséré en coulissement dans la gorge de guidage (90), au cours de la rotation de l'arbre de rotation (12), la position de contact de la gorge de guidage (90) avec le bloc coulissant (11) monte ou descend et le bloc coulissant (11) se déplace dans une direction de haut en bas sous le guidage de la gorge de guidage (90) ; et
une source d'alimentation pour entraîner la rotation de l'arbre de rotation (12).

2. Système selon la revendication 1, dans lequel l'ensemble d'entraînement comprend également un bras oscillant (13) pour raccorder l'arbre de rotation (12) avec la source d'alimentation, la source d'alimentation entraînant la rotation de l'arbre de rotation (12) par le bras oscillant (13).

3. Système selon la revendication 2, dans lequel le bras oscillant (13) est raccordé à demeure à une extrémité inférieure de l'arbre de rotation (12).

4. Système selon la revendication 1, dans lequel l'axe de rotation de l'arbre de rotation (12) est parallèle à la direction de déplacement de la tige d'élévation (10) par rapport au châssis de machine, la gorge de guidage (90) s'étendant de façon inclinée par rapport à un plan perpendiculaire à l'axe de rotation.

5. Système selon la revendication 1, dans lequel la protubérance (9) a un côté en forme d'arc sur lequel la gorge de guidage (90) est ouverte, l'axe central de la circonférence où il y a le côté en forme d'arc et l'axe de rotation coïncident.

6. Système selon la revendication 1, dans lequel l'ensemble d'ouverture et de fermeture de moule comprend également un mécanisme de verrouillage pour verrouiller la plaque de moule mobile (3) avec la plaque de moule fixe (2) dans l'état de fermeture de moule, au moins une première plateforme convexe de raccordement (30) étant prévue sur la plaque de moule mobile (3), et un trou de goupille (31) étant ouvert sur la première plateforme convexe de raccordement (30), une seconde plateforme convexe de raccordement (20) qui est en quinconce avec la première plateforme convexe de raccordement (30) dans une direction de haut en bas étant prévue sur la plaque de moule fixe (2), le mécanisme de verrouillage comprenant un arbre de raccordement (5) disposé en coulissement sur la plaque de moule fixe (2), une tige de raccordement (7) raccordée à demeure à l'arbre de raccordement (5), et une goupille de verrouillage (6) raccordée à demeure à la tige de raccordement (7), un trou (21) étant ouvert sur la seconde plateforme convexe de raccordement (20) pour la tige de raccordement (7) et la goupille de verrouillage (6) coulissant à l'intérieur, lorsque dans l'état d'ouverture de moule, la goupille de verrouillage (6) est située dans le trou (21), lorsque dans l'état de fermeture de moule, la goupille de verrouillage (6) coulisse par rapport à la seconde plateforme convexe de raccordement (20) et s'étend à travers le trou (21) pour s'insérer dans le trou de goupille (31).

7. Système selon l'une quelconque des revendications 1 à 6, dans lequel la tringlerie comprend également un châssis de machine qui comprend un châssis de support (14) raccordé à demeure sur la plaque de moule fixe (2), un châssis supérieur (15) situé au-dessus du châssis de support (14) et un châssis vertical (16) raccordé à demeure entre le châssis de support (14) et le châssis supérieur (15), l'ensemble d'ouverture et de fermeture de moule étant situé au-dessus du châssis de support (14), et la protubérance (9) étant située en dessous du châssis de support (14).

8. Système selon la revendication 7, dans lequel un premier trou traversant et un second trou traversant sont respectivement ouverts sur le châssis de support (14), la tige d'élévation (10) s'étendant en coulissement à travers le premier trou traversant et une extrémité supérieure de la tige d'élévation (10) étant située au-dessus du châssis de support (14), l'arbre de rotation (12) s'étendant à travers le second trou traversant et pouvant tourner dans le second trou traversant.

9. Système selon la revendication 7, dans lequel une extrémité supérieure de l'arbre de rotation (12) est raccordée en rotation au châssis supérieur (15).
